# EUROPEAN PATENT SPECIFICATION

(11) **EP 2 695 778 B1**
(45) Date of publication and mention of the grant of the patent: **14.10.2015**
(21) Application number: 13179409.1
(22) Date of filing: 06.08.2013
(51) Int. Cl.: B60R 25/40

(54) **Remote control system**
Fernsteuerungssystem
Système de télécommande

(30) Priority: 06.08.2012 JP 2012173655; 22.03.2013 JP 2013059995
(43) Date of publication of application: 12.02.2014
(73) Proprietor: Asahi Denso Co., Ltd., Hamamatsu-shi Shizuoka 434-0046 (JP); Yamaha Hatsudoki Kabushiki Kaisha, Iwata-shi, Shizuoka 438-8501 (JP)
(72) Inventor: Suzuki, Michiyuki, Hamamatsu-shi, Shizuoka 434-0046 (JP); Ohira, Sachio, Hamamatsu-shi, Shizuoka 434-0046 (JP); Maekawa, Koji, Iwata-shi, Shizuoka 438-8501 (JP)
(74) Representative: Grünecker Patent- und Rechtsanwälte PartG mbB

(56) References cited:
- DE-A1- 19 934 708
- JP-A- 2001 317 243
- US-A1- 2011 234 370

## Description

### TECHNICAL FIELD

The present invention relates to a remote control system having transmission means which a driver can carry and receiving means which is disposed in a vehicle, the transmission means having a battery and an operation section that the driver can operate and being configured to transmit an operation signal by means of an operation of the operation section, the receiving means configured to receive the operation signal transmitted from the transmission means and to activate an electrical equipment disposed in the vehicle in accordance with the operation signal.

### BACKGROUND ART

A cylinder lock of a two-wheeled vehicle is usually equipped with a rotor including a key hole, into and from which an ignition key can be inserted and pulled out. In order to prevent destroy and breakage of the cylinder lock, which would otherwise be caused when a third party inserts scissors, a driver, or the like, into the key hole, a cylinder lock protective device has hitherto been proposed. For instance, as described in connection with Patent Document 1, the protective device has: a shutter that can move from a close position where the key hole is closed to an open position where the key hole is opened; a housing that movably holds the shutter between the open position and the close position; a magnet lock that holds the shutter in the close position, thereby closing and locking the key hole; and a magnet lock that unlocks the magnet key by means of magnetism of a magnet.

Further, the related-art cylinder lock protective device described in connection with the patent document makes up a remote control system that has a solenoid or a motor which rotates forwardly and backwardly by remote operation of transmission means, like a remote controller. The protective device is configured so as to be able to open and close the shutter by the remote operation of the remote controller as well as by manual operation involving use of the magnet key lock and the magnet key. Opening and closing the key hole can be performed by the shutter through the remote operation, whereby further enhanced operability can be achieved. Incidentally, the transmission means has a built-in battery and is configured such that electric power for transmission is supplied from the battery.

### [Related-Art Document]

### [Patent Document]

[Patent Document 1] JP-A-2001-317243
[Patent Document 2] DE 199 34 708 A1
[Patent Document 3] US 2011/0234370 A1

However, in the related-art remote control system, the shutter can be opened and closed by the remote operation of the transmission means, like a remote controller, so that enhanced operability can be achieved. However, when the built-in battery of the transmission means becomes exhausted, remote operation naturally becomes impracticable. However, since a degree of exhaustion of the battery in the transmission means cannot be determined, there has been a problem that a driver cannot become aware of exhaustion of the battery until remote operation actually becomes impracticable. In this respect, the problem is not limited solely to the cylinder lock protective device, such as that mentioned above, and is common to general remote control systems that enable remote operation between transmission means carried by the driver and receiving means disposed in the vehicle.

### SUMMARY

Exemplary embodiments of the invention provide a remote control system in which it can allow a grasp on exhaustion of the battery built in the transmission means, and remote operation can be performed without fail.

A remote control system according to the invention comprises:
transmission means which a driver can carry, the transmission means having a battery and an operation section which the driver can operate, the transmission means configured to transmit an operation signal in response to an operation of the operation section; and
receiving means disposed in a vehicle, and configured to receive the operation signal transmitted by the transmission means, and to activate an electrical equipment disposed in the vehicle in accordance with the operation signal,
the remote control system further comprising:
   a cylinder lock protective device having
   a housing disposed above a rotor having a key hole for inserting and pulling out an ignition key of the vehicle,
   a shutter configured to be moved, within the housing, between a close position and an open position, and to close the key hole at the close position and open the key hole at an open position, wherein
   the receiving means is configured to move the shutter from the close position to the open position in accordance with the operation signal, and
   the transmission means is configured to transmit information about a voltage of the battery to the receiving means, and the receiving means is configured to provide a notification when the voltage of the battery has fallen to a predetermined level or below, and
the remote control system further comprises:
   notification means disposed in the vehicle, and configured to perform an operation based on the operation signal and to provide the notification when the voltage of the battery has fallen to the predetermined level or below, wherein
   the notification means is configured to light when the receiving means has received the operation signal, and to blink to notify the fall in the voltage of the battery when the receiving means has received the operation signal and the voltage of the battery has fell to the predetermined level or below, and
   wherein the notification means includes an LED which is disposed in the housing and configured to light or blink in order to illuminate the key hole, and the receiving means is configured to provide the notification when the voltage of the battery has fallen to the predetermined level or below.

In the remote control system, additional notification means may include at least either turn signal or a buzzer disposed in the vehicle, and the turn signal or the buzzer may be configured to perform ordinary operation in accordance with the operation signal when the receiving means has received the operation signal and the voltage of the battery has not fallen to the predetermined level or below, and to perform a warning operation when the receiving means has received the operation signal and the voltage of the battery has fallen to the predetermined level or below.

In the remote control system, the transmission means may be formed in a grip section of the ignition key.

In the remote control system, the transmission means may have undervoltage detection means configured to detect that the voltage of the battery has fallen to the predetermined level or below, the transmission means may be configured to transmit a notification signal along with the operation signal when the undervoltage detection means has detected occurrence of an undervoltage, and the receiving means may be configured to provide the notification in accordance with the notification signal.

In the remote control system, the operation signal or the notification signal may be transmitted when the operation section is continually operated for a predetermined period of time.

In the remote control system, the receiving means may have undervoltage detection means configured to detect that the voltage of the battery has fallen to the predetermined level or below, and to provide the notification when the undervoltage detection means has detected occurrence of the undervoltage.

The transmission means can transmit information about a battery voltage to the receiving means. The receiving means can provide a predetermined notification when the battery voltage has fallen to a predetermined level or below. Accordingly, this allows a grasp on exhaustion of the battery built in the transmission means, and remote operation can be performed without fail.

The receiving means can move the shutter from the close position to the open position in accordance with the operation signal. Further, when the battery voltage has fallen to the predetermined level or below, the receiving means can provide the predetermined notification, so that both remote operation of the shutter and provision of the predetermined notification can be performed in conjunction with each other.

The notification means disposed in the vehicle can perform an operation based on the operation signal and provide predetermined notification. When the battery voltage has fallen to the predetermined level or below, the notification means provides notification. Accordingly, the notification means can be caused to selectively perform the operation based on the operation signal and provide notification of the fall in battery voltage.

The notification means lights when the receiving means has received the operation signal. Further, when the receiving means receives the operation signal, and the battery voltage falls to the predetermined level or below, the notification means blinks to notify the fall in battery voltage. Therefore, visual notification of the fall in battery voltage allows a more reliably grasp on exhaustion of the battery built in the transmission means more reliably, so that remote operation can be performed more reliably.

The notification means includes the LED disposed in the housing and can illuminate the key hole by means of lighting or blinking. Therefore, even in a dark environment, like a nighttime, the key hole is illuminated when the shutter is moved to the open position by remote operation, thereby making the key hole visible. Thus, the notification means can fulfill both the illumination function of illuminating the key hole and the notification function of notifying the fall in battery voltage. Moreover, the driver can grasp exhaustion of the battery without fault by changing an operation mode of the LED that is an electrical equipment to be activated even in normal times.

At least either the turn signal or the buzzer is disposed in the vehicle. When the receiving means has received the operation signal and the battery voltage has not fallen to the predetermined level or below, the turn signal or the buzzer performs ordinary operation based on the operation signal. Further, when the battery voltage has fallen to the predetermined level or below, the turn signal or the buzzer provides a warning. Hence, the turn signal or the buzzer can provide notification of the fall in battery voltage. Also, the driver can grasp exhaustion of the battery without fail by changing the operation mode of the turn signal or the buzzer that is an electric equipment to be activated even in normal times.

Since the transmission means is formed in the grip section of the ignition key, remote operation of the shutter and operation for inserting the ignition key into the key hole can be smoothly performed in succession. Thus, further enhanced operability can be achieved.

The transmission means has the undervoltage detection means capable of detecting that the battery voltage has fallen to the predetermined level or below. When the undervoltage detection means has detected occurrence of an undervoltage, the transmission means can transmit a predetermined notification signal along with an operation signal. Further, the receiving means can provide the predetermined notification in accordance with the notification signal. Hence, this allows a more accurate grasp on exhaustion of the battery built in the transmission means, and remote operation can be performed more reliably.

On the condition that the operation section is continually operated for a predetermined period of time, the operation signal or the notification signal is transmitted. Hence, occurrence of erroneous operation, which would otherwise be caused a faulty touch on the operation section, can be inhibited.

The receiving means has the undervoltage detection means capable of detecting that the battery voltage has fallen to the predetermined level or below. When the undervoltage detection means has detected occurrence of an undervoltage, the receiving means can provide the predetermined notification. Accordingly, this allows a more accurate grasp on exhaustion of the battery built in the transmission means, and remote operation can be performed more reliably.

### BRIEF DESCRIPTION OF THE DRAWINGS

Fig. 1 is a perspective view showing a cylinder lock protective device applied to a remote control system of a first embodiment of the invention;
Fig. 2 is a front view showing the cylinder lock protective device;
Fig. 3 is a plan view showing the cylinder lock protective device;
Fig. 4 is a cross sectional view taken along line IV - IV shown in Fig. 3;
Fig. 5 is a perspective view showing a shutter of the cylinder lock protective device;
Fig. 6 is a perspective view showing engagement means of the cylinder lock protective device;
Figs. 7A and 7B are cross sectional diagrams showing operation of a magnet lock of the cylinder lock protective device;
Figs. 8A to 8C are diagrams showing an ignition key of the cylinder lock protective device;
Fig. 9 is a cross sectional view taken along line IX - IX shown in Fig. 8;
Fig. 10 is a diagram showing receiving means of the cylinder lock protective device;
Fig. 11 is a cross sectional view taken along line XI - XI show in Fig. 10;
Fig. 12 is a block diagram showing an entire configuration of the cylinder lock protective device;
Figs. 13A to 13C are plan views showing disengagement of the shutter performed by remote operation of the cylinder lock protective device;
Fig. 14 is a cross sectional view showing disengagement of the shutter performed by remote operation of the cylinder lock protective device;
Fig. 15 is a plan view showing disengagement of the shutter performed by manual operation of the cylinder lock protective device;
Fig. 16 is a block diagram showing an entire configuration of a remote control system of a second embodiment of the invention; and
Fig. 17 is a flowchart showing control specifics of the remote control system.

### DETAILED DESCRIPTION

Embodiments of the invention are hereunder specifically described by reference to the drawings.

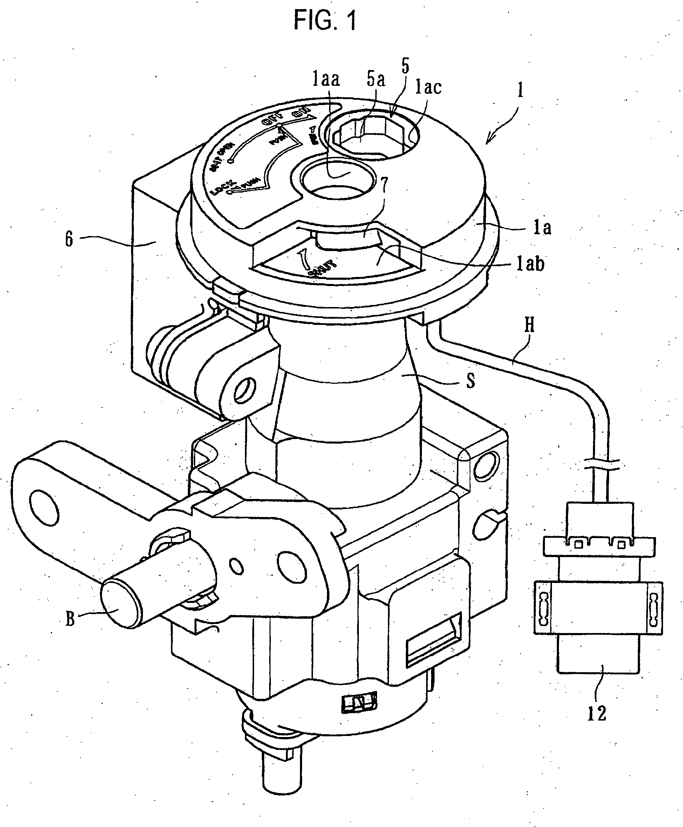

A remote control system of a first embodiment is applied to a cylinder lock protective device. The cylinder lock protective device is placed above a key hole of a cylinder lock provided in a two-wheeled vehicle (vehicle). The cylinder lock protective device can protect the cylinder lock by enabling opening and closing of the key hole from the outside. As show in Figs. 1 through 6, Figs. 7A and 7B, Figs. 8A to 8C, and Figs. 9 to 12, the cylinder lock protective device is primarily made up of a housing 1; a shutter 2; transmission means 11; receiving means 12; undervoltage detection means 18; and an LED 10 serving as notification means. The receiving means 12 is electrically connected to predetermined components (a solenoid 6, the LED 10, and others) arrayed in the housing 1 by way of electric wiring H (see Fig. 1).

The housing 1 is disposed at a position above a rotor R; houses various components which make up the protective device; and is arranged so as to be able to house an upper end portion of a cylinder body S that makes up the cylinder lock. A rotor R having a plurality of tumblers is disposed within the cylinder body S. A key hole Ra is formed in the rotor R and an ignition key IK can be inserted into and pulled out from the key hole Ra.

The housing 1 of the embodiment is made up of a cover 1a and a case 1b. Various components that make up the protective device are placed in the case 1b, and the cover 1a puts a covering over the case I b. The cover 1a includes an insertion slot 1aa that enables insertion of the ignition key IK while keeping the key hole Ra of the rotor R facing outside, an indentation 1ab that enables operation of a lug 7 to be described later, and a slot 1ac that holds a magnet lock 5 in a state that the magnet lock 5 faces outside.

The rotor R can be turned while the ignition key IK remains inserted in the key hole Ra, and can move among an ON position where the engine of the two-wheeled vehicle is started, an OFF position where the engine is stopped, and a lock position where a handle bar provided in the vehicle is locked. When the rotor R is situated at the OFF position, the ignition key IK inserted in the key hole Ra is pushed in and turned, while being pushed, left when viewed from above, whereby turning the rotor R to the lock position becomes practicable. A lock bar B in the cylinder body S is configured so as to protrude upon movement of the rotor R to the lock position. The lock bar B is inserted into engagement with a lock slot (not shown) formed in a rotary shaft of the handle bar (not shown) of the two-wheeled vehicle, whereby the handle bar is locked.

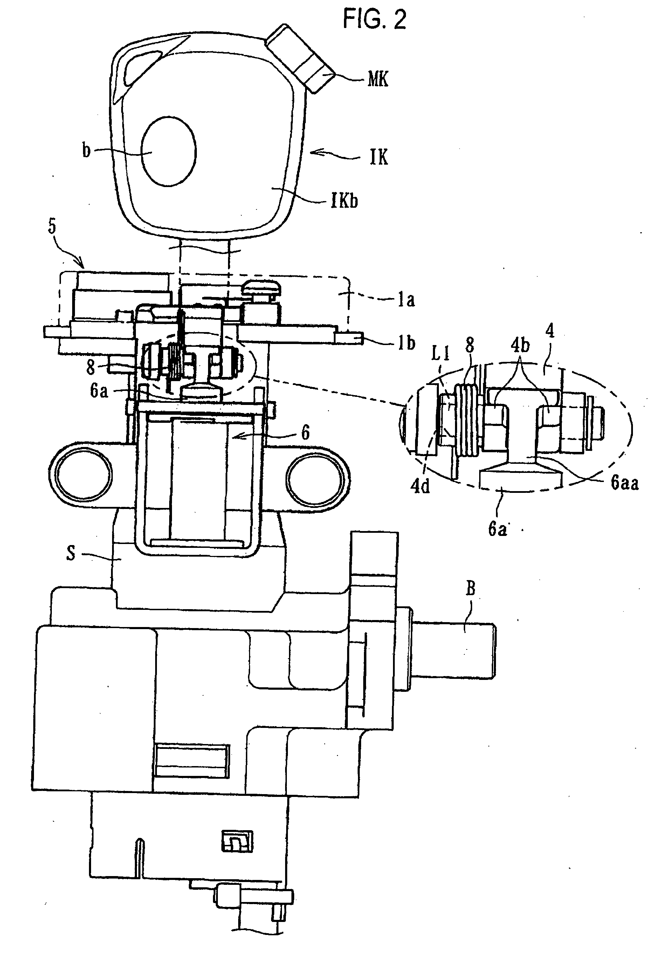

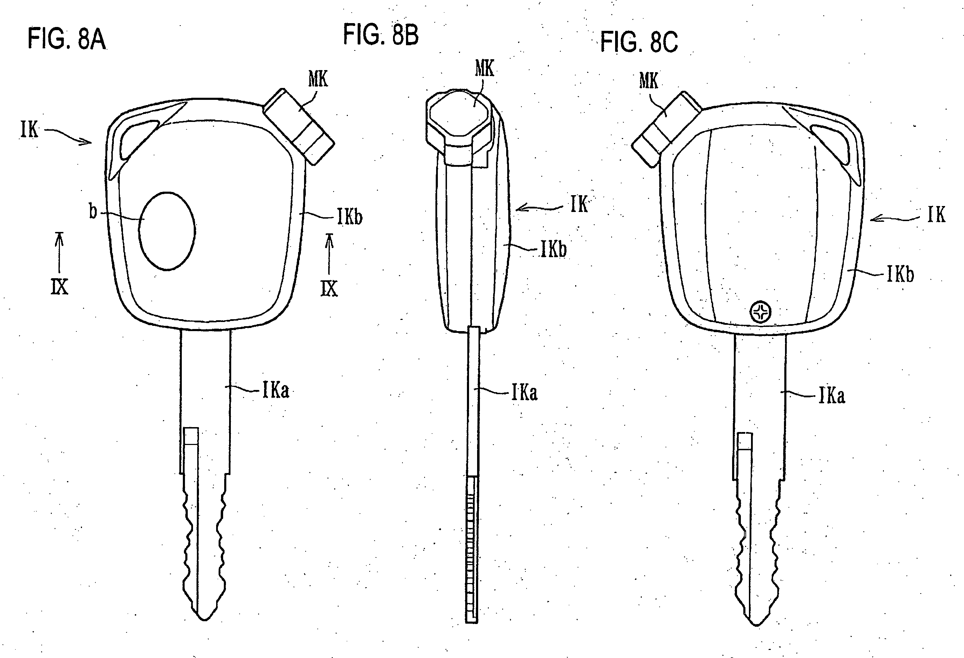

In the meantime, as shown in Fig. 2 and Fig. 8A to 8C, the ignition key IK is formed with a grip section IKb that the driver can carry and that is formed from a resin-molded component. A key section IKa with key crests and a groove extends from the grip section IKb. The key section IKa can be inserted into the key hole Ra of the rotor R. The grip section IKb has an operation section "b" that can be operated by the driver and a battery D. In addition, the grip section IKb is provided with the transmission means 11 capable of emitting a radio wave in response to operation of the operation section "b" to thus transmit a predetermined operation signal.

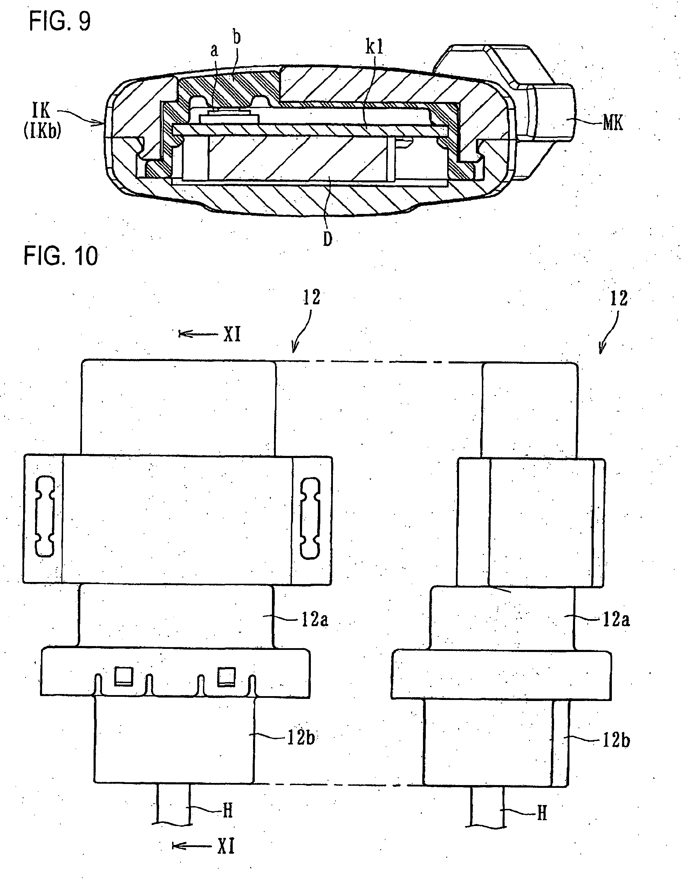

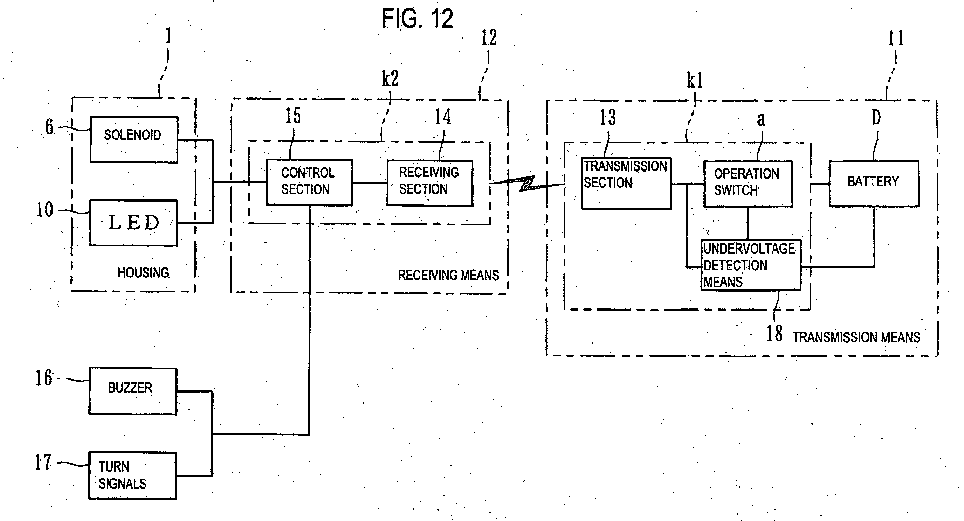

Specifically, as shown in Fig. 9, the transmission means 11 is formed in the grip section IKb of the ignition key IK and has the operation section "b" made up of a button which the driver can operate, the battery D that can be supplied with electric power, and a board k1 (see Fig. 9). The battery D is made up of a miniature battery built in the grip section IKb; for instance, a button battery, and can supply electric power to the board k1. The board k1 is made up of a printed board on which a predetermined electric circuit is printed and a microcomputer, and the like, is mounted. As shown in Fig. 12, a transmission section 13 capable of transmitting a predetermined operation signal by emitting a radio wave, an operation switch "a" which is switched to an electrically ON state by pushing the operation section "b," and the undervoltage detection section 18 are formed on the board k1.

The transmission section 13 can transmit the predetermined operation signal by emitting the radio wave on the condition that the operation section "b" is pushed, and is made up of; for instance, a circuit section printed on the board k1. When the driver pushes the operation section "b," the operation switch "a" is thereby turned on, and the radio wave is emitted from the transmission section 13. In addition, the predetermined operation signal is transmitted by the radio wave, whereby remote operation of the shutter 2, such as that will be described later, becomes practicable.

In the embodiment, the undervoltage detection means 18 is electrically connected to the battery D and the transmission section 13. Such an undervoltage detection section 18 can detect that a voltage of the battery D has fallen to a predetermined level or below and is made up of; for instance, an arithmetic section fabricated in a microcomputer, or the like, which is mounted on the board k1. A predetermined voltage (a predetermined level) set by the undervoltage detection means 18 is a voltage at which remote control is presumed to become impracticable, and the voltage is taken as a threshold level.

When the voltage of the battery D detected by the undervoltage detection means 18 falls to the threshold level or below, a predetermined signal is sent to the transmission section 13. When transmitting an operation signal by emitting a radio wave, the transmission section 13 received the predetermined signal also transmits a notification signal along with the operation signal. The transmission section 13 can thereby transmit the predetermined notification signal along with the operation signal on the condition that the undervoltage detection means 18 detects occurrence of an undervoltage.

In addition, in the embodiment, the operation signal or the notification signal is transmitted on the condition that the operation section "b" is continually pushed for a predetermined time of time (a long-stroke push). This inhibits occurrence of erroneous operation, which would otherwise be caused by a fault touch on the operation section "b." In this respect, the operation section "b" of the embodiment is made up of a push button. However, the operation section "b" can also be made up of operation means of another mode (a seesaw-type switch, or the like).

In the meantime, when the operation section "b" is pushed only for a short period of time, right and left turn signals 17 (see Fig. 12) provided on the vehicle are configured so as to be able to respond by blinking a predetermined number of times. If the operation section "b" is pushed in a place where a plurality of two-wheeled vehicles are parked, the turning signals 17 of the driver's vehicle perform blinking, so that the driver can readily realize the driver's vehicle from a remote location. In this respect, the following configurations are preferable. To be specific, when the operation section "b" is pushed only for a short period of time, the turn signals 17 blink a plurality of times, and also a buzzer 16 mounted on the vehicle (see Fig. 12) sounds the alarm a number of times. In contrast, when the operation section "b" is continually pushed for a long period of time (a long-stroke push), the turn signals 17 blink once, and the buzzer 16 sounds the alarm once.

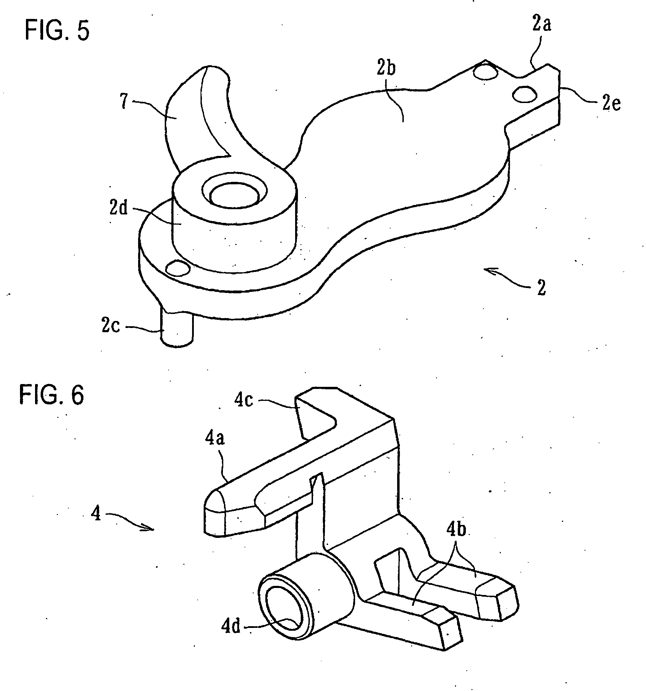

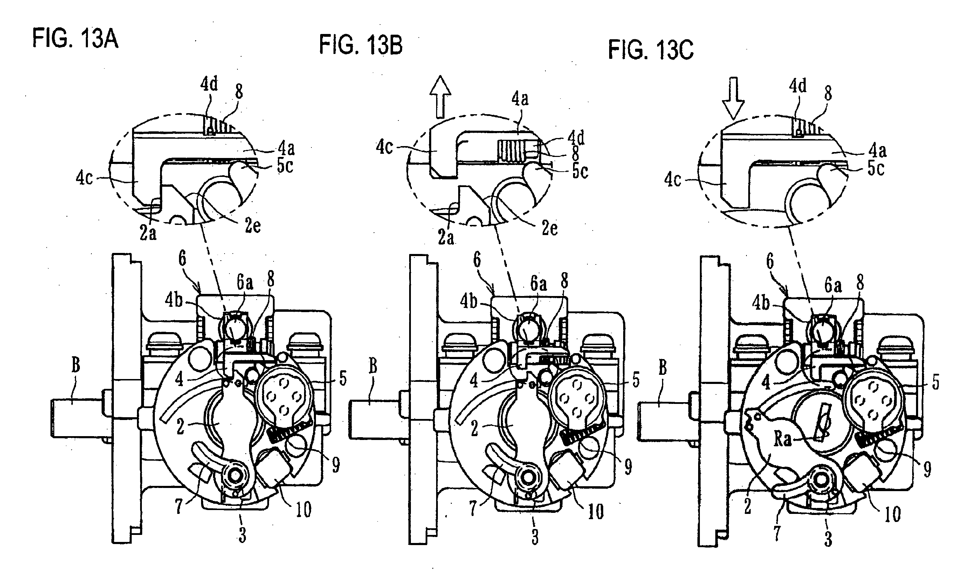

The shutter 2 is movable (can be turned in the embodiment) between the close position (see Fig. 13A) and the open position (see Fig. 13C) within the housing 1 and can close the key hole Ra at the close position and open the key hole Ra at the open position. Specifically, as shown in Fig. 5, the shutter 2 of the embodiment is made of a metal component that is formed by integration of an engaged section 2a, a shield 2b, a protrusion 2c, and a pivot 2d, and the lug 7.

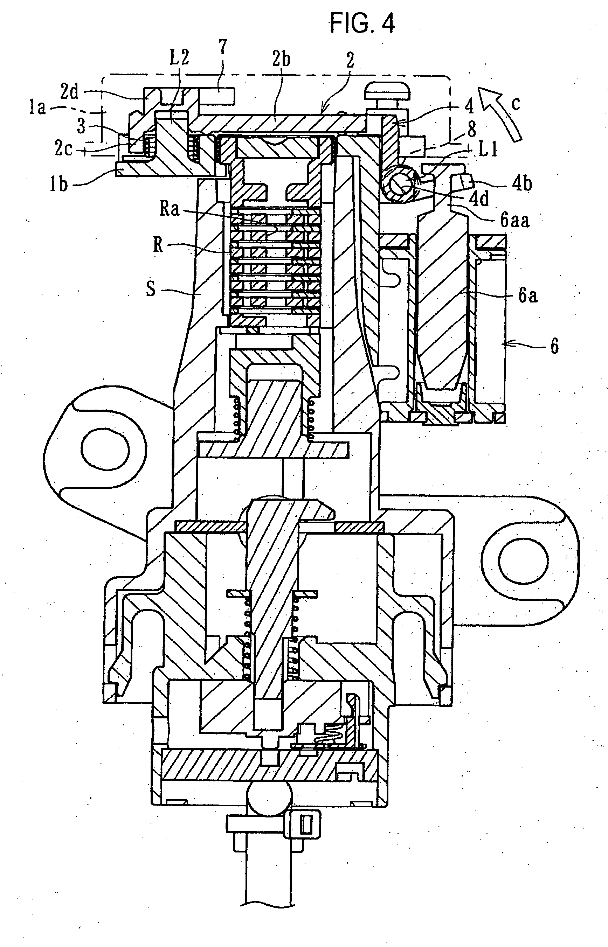

The engaged section 2a is formed from an area to be engaged with engagement means 4 and is formed at a leading end of the shutter 2. The shield 2b is formed from an area formed at a substantial center of the shutter 2 and configured so as to cover and close the key hole Ra when the shutter 2 is situated at the close position. The protrusion 2c is made up of an area jointed to one end of a torsion spring 3, and the pivot 2d is made up of a recess that enables fitting of a boss L2 (see Fig. 4) formed in a protruding manner on the case 1b of the housing 1.

The shutter 2 can be turned between the open position and the close position around the boss L2 fitted into the pivot 2d. Further, as mentioned above, the torsion spring 3 is connected at one end to the protrusion 2c and at the other end to the case 1b of the housing 1, thereby forcing the shutter 2 toward the open position at all times. When the shutter 2 is turned from the open position to the close position, the torsion spring 3 is twisted by the protrusion 2c. Accordingly, torsional restorative force oriented toward the open position is imparted to the shutter 2. In this respect, another forcing means for forcing the shutter 2 toward the open position at all times (i.e., an elastic body, such as a leaf spring, a coil spring, and a soft resin) can also be adopted in place of the torsion spring 3.

Further, the lug 7 that enables manual actuation of the shutter 2 from the open position to the close position is formed on the shutter 2. The lug 7 is made up of an integral extension that stretches sideways from the pivot 2d of the shutter 2. When the shutter 2 is situated at the open position, the lug 7 is situated at a position where the recess 1 ab of the cover 1a is formed, whereby the lug 7 can be pinched and actuated by fingers. In addition, when the shutter 2 is situated at the close position, the lug 7 is situated within the cover 1a, so that the lug 7 cannot be actuated.

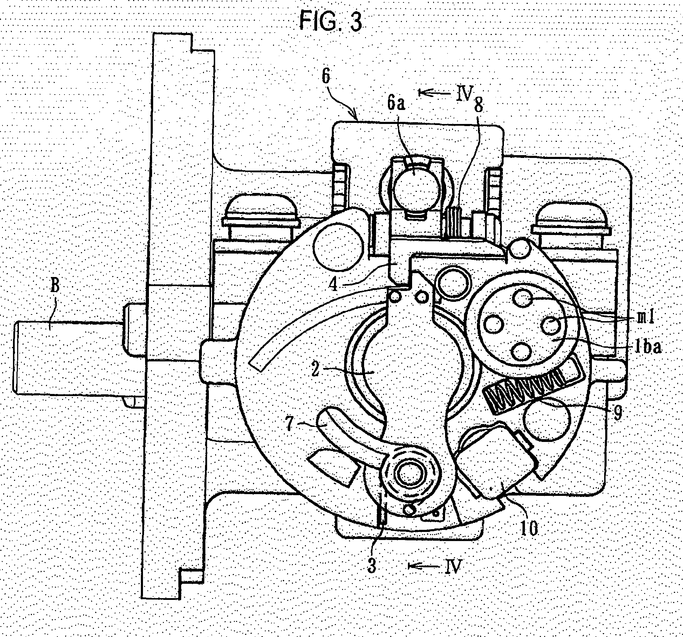

As shown in Fig. 3, the engagement means 4 can engage with the shutter 2 situated at the close position. In the embodiment, as shown in Fig. 6, the engagement means 4 is made up of a single member (a link-shaped member) including a first area 4a to which actuation force of the magnet lock 5 is transmitted, a second area 4b to which drive force of the solenoid 6 is transmitted, an engagement section 4c that can come into contact and engagement with the engaged section 2a of the shutter 2, and a pivot 4d.

The pivot 4d is formed from a hole that penetrates through the engagement means 4 in its widthwise direction and enables insertion of a swing shaft L1 (see Fig. 4) formed on the housing 1 (a fixing member side). The engagement means 4 can swing around the swing shaft L1 (a predetermined shaft). A first area 4a and an engagement section 4c are formed at one end of the engagement means 4, and a second area 4b is formed at the other end of the same.

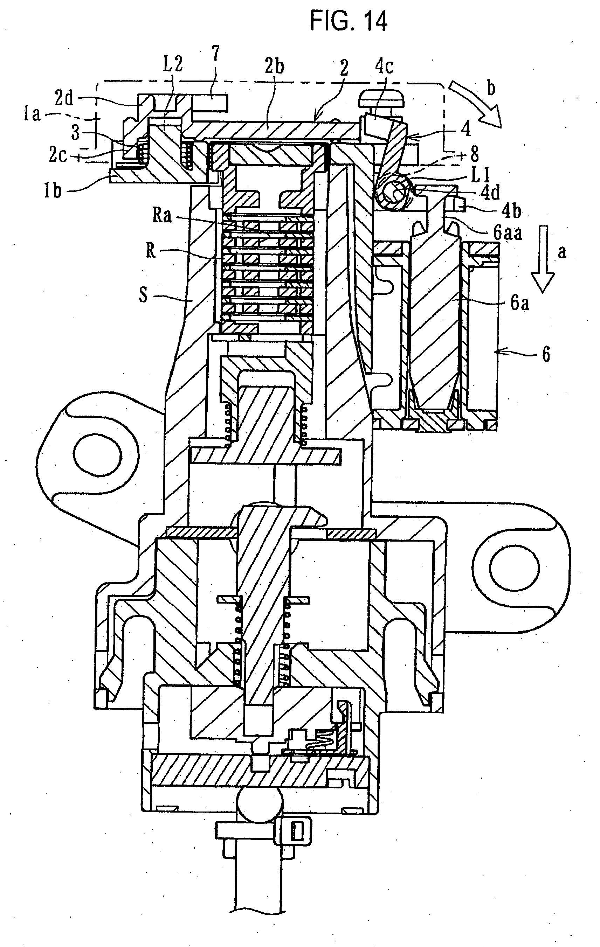

Thus, the engagement means 4 swings around the swing shaft L1, thereby making the shutter 2 movable between a position where the engagement means 4 is engaged with the shutter 2 (see Fig. 4) and another position (see Fig. 14) where it is disengaged from the shutter 2. As shown in Figs. 2 and 4, a torsion spring 8 that is joined at one end to a stationary side and at the other end to the engagement means 4 is attached to the swing shaft L1. The engagement means 4 is forced at all times in direction "c" shown in Fig. 4 by means of the torsion spring 8. The engagement means 4 is forced, at all times, toward the position where it engages with the shutter 2.

The magnet lock 5 (a component that enables provision of manual operation) and the solenoid 6 (a component that enables provision of remote operation) bring the shutter 2 out of engagement with the engagement means 4, letting the shutter 2 move from the close position to the open position by dint of the torsional restorative force of the torsion spring 3. Specifically, in the embodiment, the shutter 2 can be disengaged from the engagement means 4 by means of both manual operation effected by the magnet lock 5 and remote operation effected by the solenoid 6. By selectively activating the magnet lock 5 or the solenoid 6, the shutter 2 can be moved from the close position to the open position.

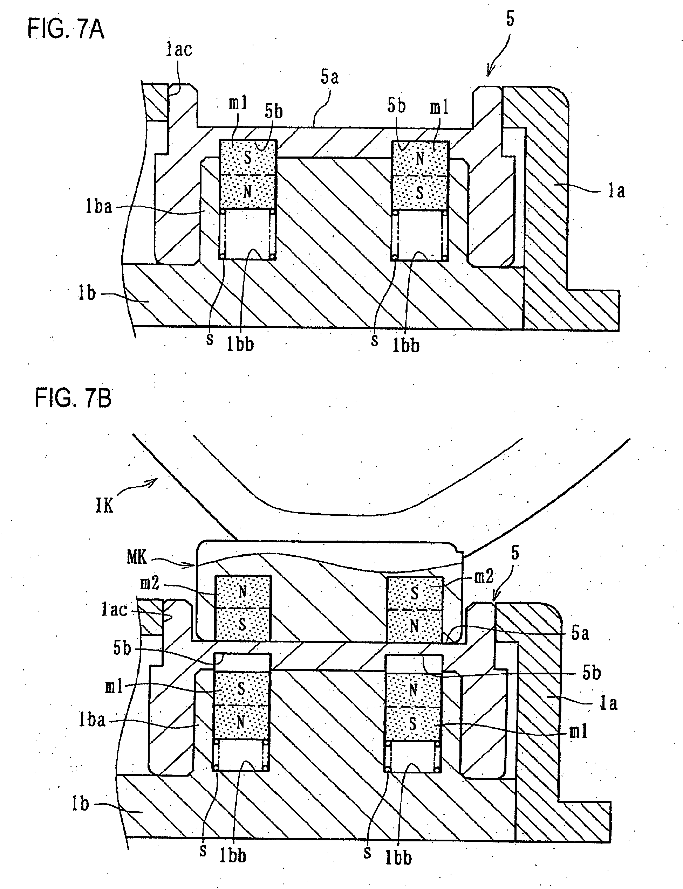

Since the magnet lock 5 is for releasing engagement with the engagement means 4 by means of manual operation and, as shown in Figs. 7A and 7B, is made up of a tubular member fitted to the boss 1ba formed on the case 1b of the housing 1. More specifically, a plurality of (four in the embodiment) of accommodation holes 1bb, each of which accommodates a magnet m1 and a spring "s" for forcing the magnet m1 upwardly, are formed in a top surface of the boss 1ba. Fit holes 5b which each allow fitting of the corresponding magnets m1 are formed in positions (on a back surface) of the magnet lock 5 that correspond to the respective accommodation holes 1bb. As shown in Fig. 7A, the respective magnets m1 fit into the respective fit holes 5b, whereby the turn of the magnet lock 5 can be restricted and locked.

In the meantime, a magnet key MK is formed in the grip section IKb of the ignition key IK. The magnet key MK has a shape that enables fitting of the magnet key MK to a fitting section 5a formed on a top surface of the magnet lock 5, and magnets m2 are embedded in positions on the magnet key MK corresponding to the respective magnets m1. Setting is made in such a way that, when the legitimate magnet key MK is fitted to the fitting section 5a, as shown in Fig 7B the magnets m1 oppose the respective magnets m2 and that magnetic force of the magnets m1 and magnetic force of the magnets m2 repel each other (such that the S poles of the respective magnets m1 and the S poles of the respective magnets m2 oppose each other and that likewise the N poles of the respective magnets m1 and the N poles of the respective magnets m2 oppose each other).

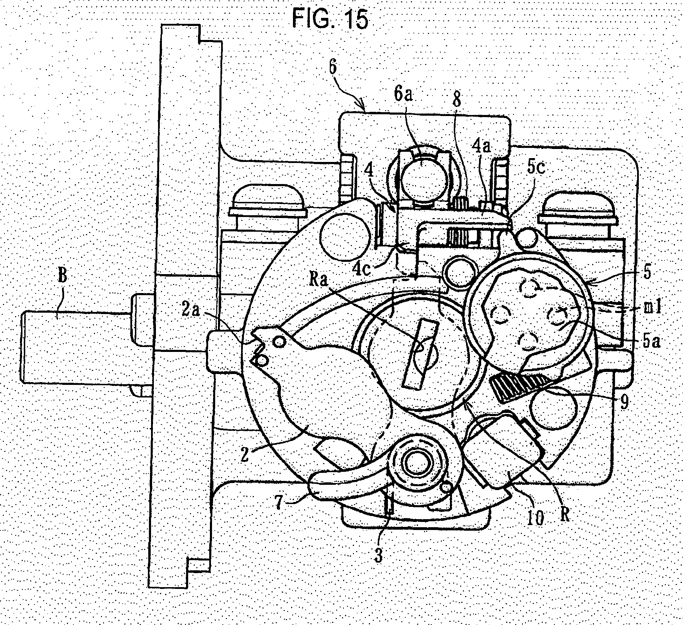

When the legitimate magnet key MK is fitted to the fitting section 5a, the magnets m1 descend against the torsional restorative force of the springs "s", to thus release themselves from the fit with the respective fit holes 5b. Accordingly, if the magnet key MK is turned in a predetermined direction while being kept in that state, the magnet lock 5 can be turned in that direction. Further, a contact 5c (see Fig. 15) that will be able to contact the first area 4a of the engagement means 4 in the course of turning of the magnet lock 5 is formed at a predetermined position on the magnet lock 5.

When the magnet lock 5 is turned in a predetermined direction along with the magnet key MK after being released from the fit effected by the magnets m1 by means of the magnet key MK, as shown in Fig. 15, the contact 5c comes into contact the first area 4a of the engagement means 4, pushing the first area 4a in the same direction and thereby enabling the engagement means 4 to swing against the torsional restorative force of the torsion spring 8. The shutter 2 is thereby disengaged from the engagement means 4, moving from the close position to the open position by dint of the torsional restorative force of the torsion spring 3.

The magnet lock 5 of the embodiment is forced at all times toward a position where the magnet lock 5 is to be locked by a coil spring 9 disposed in the case 1b of the housing 1 (i.e., a position where turning of the magnet lock 5 is restricted as a result of the magnets m1 fitting into their respective fit holes). After the shutter 2 is disengaged from the engagement means 4, the actuation force originating from the magnet key MK is thereby weakened, or the magnet key MK is removed, whereby the magnet lock 5 naturally returns to its original position (a lock position) by dint of torsional restorative force of the coil spring 9.

The solenoid 6 is for releasing the engagement effected by the engagement means 4 upon being actuated by remote operation. In the embodiment, as shown in Figs. 2 and 4, the solenoid 6 is made up of an actuator that can actuate a plunger 6a upon being supplied with electric power through remote operation. The engagement means 4 is operated by actuation of the plunger 6a, there releasing the engagement. To be more specific, the second area 4b of the engagement means 4 is formed into a cutout (see Fig. 6) that enables insertion of a predetermined area (an area that is smaller in diameter than the other area) 6aa of the plunger 6a. The predetermined area 6aa of the plunger 6a is inserted into the cutout, thereby joining the engagement means 4 to the solenoid 6.

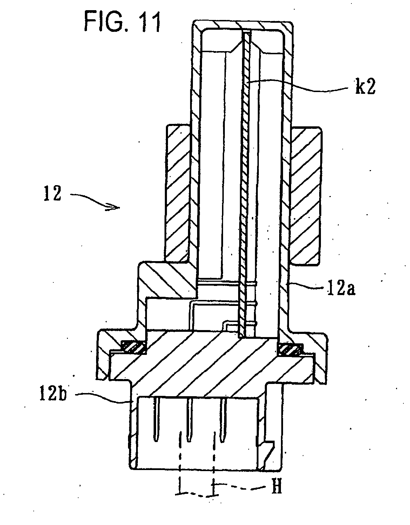

In the mean time, the receiving means 12 is placed at a predetermined area of the two-wheeled vehicle (vehicle); receives a radio wave transmitted by the transmission means 11; and can move the shutter 2 from the close position to the open position in accordance with an operation signal carried by the radio wave. As shown in Figs. 10 and 11, the receiving means 12 is made up of a case 12a and a connector 12b. A board k2 is made up of a printed board on which a predetermined electric circuit is printed, and is accommodated in the case 12a.

A receiving section 14 and a control section 15 are formed on the board k2. The receiving section 14 is made up of an antenna formed from a printed circuit section, and can receive the radio wave from the transmission means 11. The control section 15 actuates the solenoid 6 in accordance with the operation signal received by the receiving section 14, thereby enabling the shutter 2 to move from the close position to the open position by means of remote operation. The control section 15 is made up of an arithmetic section mounted on the board k2, like a microcomputer, and electrically connected to the solenoid 6 and the LED 10 and further to the buzzer 16 and the turn signals 17 by way of the connector 12b and the electric wiring H.

When the operation button "b" formed on the grip section IKb of the ignition key IK is pushed (for example, continually pushed for a predetermined period of time), a radio wave including an operation signal or a notification signal is emitted. When the receiving section 14 (see Fig. 12) of the receiving means 12 receives the operation signal or the notification signal, electric power is supplied to a coil (not shown) provided in the solenoid 6 under control of the control section 15, thereby lowering (moving in direction "a" shown in Fig. 14) the plunger 6a to thus pull the second area 4b (the area joined to the plunger 6a by means of the cutout) in the same direction, thereby enabling the engagement means 4 to swing in direction "b" in Fig. 14 against the torsional restorative force of the torsion spring 8. The shutter 2 is thereby disengaged from the engagement means 4, whereupon the shutter 2 moves from the close position to the open position by dint of the torsional restorative force of the torsion spring 3.

Specifically, as shown in Figs. 13A to 13C, when the operation section "b" is pushed while the shutter 2 placed at the close position remains in engagement with the engagement means 4 (see Fig. 13A), the radio wave including an operation signal or the notification signal is emitted from the transmission section 13 of the transmission means 11. When the receiving section 14 of the receiving means 12 receives the radio wave, the control section 15 supplies electric power to the solenoid 6. Accordingly, the engagement means 4 swings around the swing shaft L1 against the torsional restorative force of the torsion spring 8 as shown in Fig. 13B, whereupon the engagement section 4c is spaced apart from the engaged section 2a. The shutter 2 is thereby disengaged and turned to the open position by dint of the torsional restorative force of the torsion spring 3 (see Fig. Fig. 13C).

In order to bring the shutter 2 placed at the open position to the close position, there is required operation for moving the lug 7 while pinching it between fingers. To be specific, a predetermined gradient 2e (see Fig. 5) is formed at a leading end of the shutter 2 (an area adjoining to the engaged section 2a). During the course of the shutter 2 located at the open position being turned to the close position by actuation of the lug 7, the gradient 2e pushes the engagement section 4c, thereby swinging the engagement means 4 around the swing shaft L1. The shutter 2 can thereby be turned further to the close position. When the shutter 2 comes to the close position, the engagement means 4 swings to the original position under the torsional restorative force of the torsion spring 8, whereupon the engagement section 4c comes into contact with the engaged section 2a. The shutter 2 is thus engaged at the close position.

Incidentally, in the embodiment, on the condition that the undervoltage detection means 18 in the transmission means 11 detects occurrence of an undervoltage (i.e., that a voltage of the battery D built in the grip section IKb has fallen to the predetermined level or below), the transmission section 13 can transmit a predetermined notification signal along with the operation signal by means of the radio wave. Upon the notification signal being received by the receiving section 14, the receiving means 12 can let the control section 15 provide predetermined notification in accordance with the notification signal.

In the embodiment, the predetermined notification to be provided in accordance with the notification signal is practiced by blinking the LED 10 (notification means) disposed in the housing 1. As shown in Fig. 3, the LED 10 is disposed in the case 1b of the housing 1 and can light when the receiving section 14 of the receiving means 12 receive the operation signal, thereupon illuminating the key hole Ra of the rotor R. On the occasion when the shutter 2 is moved to the open position by remote operation, even in a dark environment like a nighttime, the key hole Ra is illuminated and made visible. This allows easy insertion of the ignition key IK into the key hole Ra.

As mentioned above, the LED 10 of the embodiment lights when the receiving section 14 of the receiving means 12 receive the operation signal. When the receiving section 14 of the receiving means 12 receives the notification signal along with the operation signal, the LED 10 blinks, to thus enable notification of the fall in battery voltage. The fall in the voltage of the battery D is visually notified by blinking the LED 10, thereby allowing a more reliable grasp on exhaustion of the battery D built in the transmission means 11 and more reliable performance of remote operation.

Further, the notification means is made up of the LED 10 disposed in the housing 1 and can illuminate the key hole Ra by illumination or blinking. Hence, the notification means can fulfill both an illumination function of illuminating the key hole Ra in a dark environment, like a nighttime, and also a notification function of notifying a fall in the voltage of the battery D. Further, the driver can grasp exhaustion of the battery D without fail by changing an operation mode of the LED 10 that is electrical equipment to be activated even in normal times. To be specific, the electrical equipment to be activated in normal times is intended especially for enhancing the driver's convenience (particularly, in the embodiment, the LED is illuminated so that the driver can easily look the key hole Ra when inserting the ignition key IK into the key hole Ra). The mode of the electrical equipment that the driver necessarily looks when performing ordinary operation is changed at the time of occurrence of a fall in the voltage of the battery D. Therefore, it is possible to let the driver grasp exhaustion of the battery D without fail. Moreover, the transmission means 11 of the embodiment is formed in the grip section IKb of the ignition key IK. Hence, remote operation of the shutter 2 (in other words, operation for pushing the operation section "b") and operation for inserting the ignition key IK into the key hole are smoothly performed in succession, so that more enhanced operability can be achieved.

In the cylinder lock protective device (a remote control system) of the embodiment, the transmission means 11 has the undervoltage detection means 18 capable of detecting that the voltage of the battery D has fallen to the predetermined level or below. On the condition that the undervoltage detection section 18 detects occurrence of an undervoltage, the transmission means 11 can transmit a predetermined notification signal by means of the radio wave along with the operation signal. The receiving means 12 can provide predetermined notification in accordance with the notification signal. Hence, exhaustion of the battery D built in the transmission means 11 can be grasped, so that remote operation can be performed without fail. Incidentally, the transmission means can also be replaced with another thing capable of transmitting both the operation signal and the predetermined notification signal by means of a medium other than the radio wave (e.g., infrared radiation, and the like) (this also applies to a second embodiment).

The cylinder lock protective device of the embodiment has the magnet lock 5 (manual disengagement means) for releasing the engagement effected by the engagement means 4 through manual operation and the solenoid 6 (remote disengagement means) for releasing the engagement effected by the engagement means 4 through remote operation. Since both the magnet lock 5 and the solenoid 6 can actuate the shutter 2 by activating the engagement means 4, so that the shutter 2 can be actuated by means of both manual operation and remote operation. Further, it is possible to allow both the magnet lock 5 (the manual disengagement means) and the solenoid 6 (the remote disengagement means) to perform disengagement operation by way of the common engagement means 4, so that a simplified configuration can be implemented.

Further, since the engagement means 4 of the embodiment is made up of a single member that has the first area 4a to which the actuation force of the magnet lock 5 (the manual disengagement means) is transmitted and the second area 4b to which the drive force of the solenoid 6 (the remote disengagement means) is transmitted, a more simplified configuration can be fulfilled. In addition, the engagement means 4 of the embodiment can swing around the predetermined shaft (the swing shaft L1). The first area 4a is formed at one end of the engagement means 4, and the second area 4b is formed at the other end of the same. Accordingly, this allows the magnet lock 5 (the manual disengagement means) and the solenoid 6 (the remote disengagement means) to smoothly, reliably perform disengagement operation.

Furthermore, the remote disengagement means of the embodiment is made up of the solenoid 6 that is supplied with electric power through remote operation and actuates the plunger 6a. Since the engagement means 4 is activated by actuation of the plunger 6a to thus enable performance of disengagement, the remote disengagement means can perform disengagement operation more smoothly and reliably. Further, the engagement means 4 has the cutout that allows insertion of the predetermined area 6aa of the plunger 6a. The plunger 6a is inserted into the cutout, thereby joining the engagement means 4 to the solenoid 6. Accordingly, compared to a case where the plunger 6a is fixed to the second area 4b of the engagement means 4, movement of the engagement means 4, which would otherwise be caused when the plunger 6a is moved by external physical impacts or vibrations, can be inhibited.

In particular, the second area 4b of the engagement means 4 is formed from the cutout as described in connection with the embodiment, and the plunger 6a is inserted into the cutout, to thus join the engagement means 4 to the plunger 6a. Thereby, during swing of the engagement means 4 caused by manual operation (in other words, during turning of the magnet lock 5), swinging the engagement means 4 is allowed without being accompanied by the plunger 6a. Thus, the engagement means 4 can more smoothly perform disengagement operation.

Further, in the cylinder lock protective device of the embodiment, the lug 7 that allows the shutter 2 to be manually moved from the open position to the close position is formed on the shutter 2. Therefore, operability achieved when the shutter 2 closes the key hole Ra can be enhanced further. In this respect, in the embodiment, the lug 7 is made up of the area that is formed integrally with the shutter 2. However, a separate lug can also be attached to a predetermined area of the shutter 2 (i.e., the lug is not limited to the extension from the pivot 2d).

A remote control system of a second embodiment of the invention is now described.

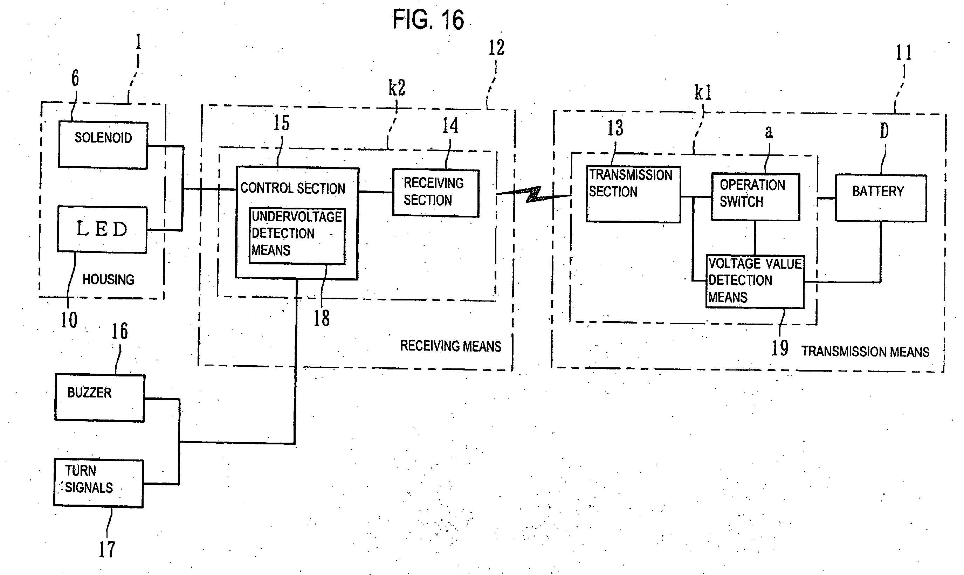

As shown in Fig. 16, in addition to including the cylinder lock protective device described in connection with the first embodiment, the remote control system of the embodiment includes the transmission means 11, the receiving means 12, the LED 10, the buzzer 16, the turn signals 17, and the undervoltage detection means 18. The LED 10, the buzzer 16 and the turn signals 17 serve as the notification means. The constituent elements of the cylinder lock protective device, like the housing 1 and the shutter 2, are substantially tantamount to their counterparts described in connection with the first embodiment. Hence, their detailed explanations are omitted here for brevity. The constituent elements that are substantially tantamount to those described in connection with the first embodiment are assigned the same reference numerals, and their detailed descriptions are also omitted here.

As shown in Figs. 8A to 8C and Fig. 9, the transmission means 11 that the driver can carry has the operation section "b" that the driver can operate and the battery D, and can transmit a predetermined operation signal in response to operation of the operation section "b." The transmission means 11 of the embodiment has voltage value detection means 19 capable of detecting the voltage of the battery D and can detect the voltage value regardless of whether or not a fall has occurred in the voltage value of the battery D.

When the driver pushes the operation section "b," the operation switch "a" is turned on, whereupon the transmission section 13 transmits a radio wave. In addition, the predetermined operation signal and a signal corresponding to the voltage value detected by the voltage value detection means 19 (information about the voltage of the battery D) can be transmitted to the receiving means 12 by means of the radio wave. In the meantime, the undervoltage detection means 18 is formed in the control section 15 of the receiving means 12. On the basis of the information about the battery voltage detected by the receiving section 14, the undervoltage detection means 18 can detect that the voltage of the battery D has fallen to the predetermined level or below.

The notification means of the embodiment is herein made up of the buzzer 16 and the turn signals 17 provided in the two-wheeled vehicle (vehicle). The buzzer 16 and the turn signals 17 can perform ordinary operation and provide notification that are based on the operation signal. To be more specific, on the occasion when the operation switch "a" of the transmission means 11 is pushed and on the occasion when the receiving means 12 receives the operation signal, if the undervoltage detection means 18 does not detect occurrence of an undervoltage, the buzzer 16 and the turn signals 17 (notification means) are caused to perform ordinary operation [e.g., the turn signals 17 blink a predetermined number of times and the buzzer 16 outputs a predetermined sound with a view toward letting the driver realize the location of the driver's two-wheeled vehicle (a so-called answer callback function)], whilst, if the undervoltage detection means 18 detects occurrence of an undervoltage, the buzzer 16 and the turn signals 17 (notification means) are caused to provide a warning (i.e., operation that differs from the foregoing ordinary operations).

In the embodiment, in addition to the buzzer 16 and the turn signals 17, the LED 10 provided in the housing 1 of the cylinder lock protective device is taken as notification means in the same manner as in the first embodiment. Specifically, on the occasion when the operation switch "a" of the transmission means 11 is pushed and on the occasion when the receiving means 12 receives the operation signal, if occurrence of an undervoltage is not detected by the undervoltage detection 18, the LED 10 in the housing 1 is lighted, whilst, if occurrence of an undervoltage is detected by the undervoltage detection means 18, the LED 10 is blinked to thereby give a warning.

Incidentally, the essential requirement for the warning is operation that allows a grasp on a fall in the voltage value of the battery D by changing the ordinary operation. For instance, changing the number of times the turn signals 17 or changing an output from the buzzer 16 (changing a sound effect, use of a voice alarm, and the like) can be adopted as the warning operation. Furthermore, the essential requirement for the notification means is to include at least either the buzzer 16 or the turn signals 17. Alternatively, another electrical equipment provided in the two-wheeled vehicle (the vehicle) can also be caused to work as the notification means.

In the embodiment, when the operation button "b" formed in the grip section IKb of the ignition key IK is pushed for a short period of time (a short-stroke push), only the operation signal is transmitted, and the ordinary operation is carried out. Meanwhile, when the operation button "b" is pushed for a long period of time (a long-stroke push), information about the voltage of the battery D (a signal corresponding to the voltage of the battery D detected by the voltage value detection means 19) is transmitted along with the operation signal. More specifically, when the operation button "b" is subjected to short-stroke push operation, a short-stroke push signal is transmitted from the transmission section 13. In contrast, when the operation button "b" is subjected to long-stroke push operation, a long-stroke push signal is transmitted from the transmission section 13.

When the receiving section 14 receives the short-stroke push signal, the turn signals 17 and the buzzer 16 perform ordinary operation under a command from the control section 15, thereby letting the driver realize the location of the driver's two-wheeled vehicle. When the receiving section 14 receives the long-stroke push signal, the shutter 2 is moved to the open location under the command from the control section 15. In addition to the turn signals 17 and the buzzer 16, the LED 10 also performs ordinary operation (lighting), thereby illuminating the key hole. In this regard, if the undervoltage detection means 18 detects occurrence of a fall in the voltage of the battery on the occasion of receipt of the long-stroke push signal, the turn signals 17, the buzzer 16, and the LED 10 are respectively caused to provide a warning, thereby letting the driver grasp occurrence of a fall in the voltage value of the battery D.

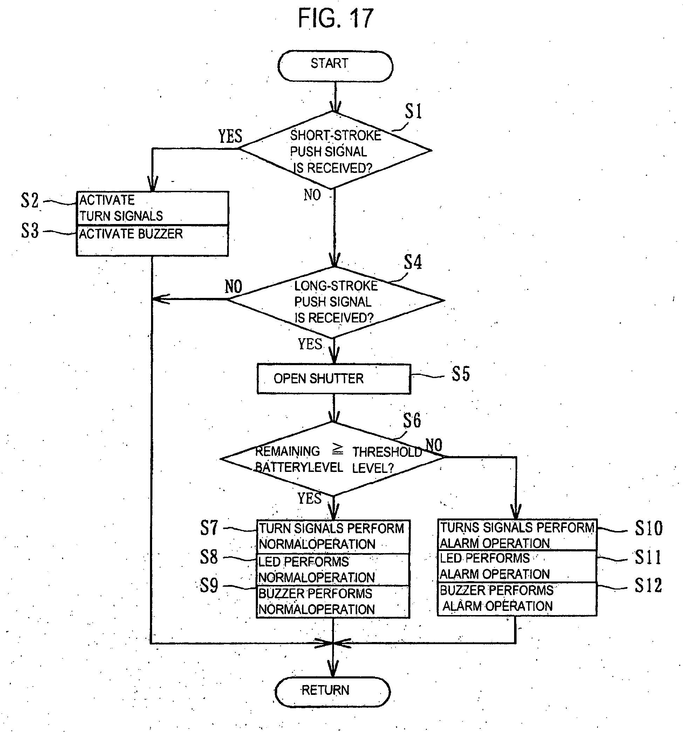

Control of the remote control system of the second embodiment is now explained according to a flowchart shown in Fig. 17.

First, the control section 15 of the receiving means 12 determines whether or not the receiving section 14 has received the short-stroke push signal (S1). When the short-stroke push signal is determined to have been received, in accordance with the operation signal received by the receiving section 14, the turn signals 17 and the buzzer 16 are caused to perform ordinary operation (e.g., the turn signals 17 blink a predetermined number of times, and the buzzer 16 gives predetermined sound for the purpose of letting the driver realize the location of the driver's two-wheeled vehicle, or the like) (S2, S3).

When the short-stroke push signal is determined not to have been received in S1, another determination is made as to whether or not the long-stroke push signal has been received (S4). When the long-stroke push signal is determined to have been received, processing proceeds to S5. The shutter 2 is then moved to the open position, and processing further proceeds to S6, where the undervoltage detection means 18 determines whether or the voltage value (a remaining battery level) of the battery D is a predetermined threshold level or more. When the voltage value of the battery D is determined to be a predetermined threshold level or more in S6, in accordance with the operation signal received by the receiving section 14, the turn signals 17, the LED 10 and the buzzer 16 are caused to perform ordinary operation (for instance, the turn signals 17 blink a predetermined number of times, and the buzzer 16 gives predetermined sound for the purpose of letting the driver realize the location of the driver's two-wheeled vehicle, and, in addition, the LED 10 illuminates the key hole, or the like) (S7, S8, S9).

In the meantime, when the voltage value of the battery D is determined not to be a predetermined threshold level or more (i.e., determined to be the threshold level or less) in S6, the turning signals 17, the LED 10, and the buzzer 16 are caused to give the warning (S10, S11, S12). As mentioned previously, the warning is different from ordinary operations that are performed in S2 and S3 and S7 to S9 in accordance with the operation signal, thereby allowing everybody around the vehicle to grasp that the battery D approaches the end of its life because of the fall in voltage value.

In the embodiment, the receiving means 12 has the undervoltage detection means 18 capable of detecting that the voltage of the battery D falls to the predetermined level or below. On the condition that the undervoltage detection means 18 detects occurrence of an undervoltage, notification is provided. Accordingly, exhaustion of the battery D built in the transmission means 11 can be grasped more accurately, so that remote operation can be performed more reliably. Further, the two-wheeled vehicle (vehicle) of the embodiment has the notification means (the buzzer 16, the turn signals 17, or the LED 10) for performing operation and providing notification in accordance with the operation signal. Further, on the condition that the undervoltage detection means 18 detects occurrence of an undervoltage, the notification means is caused to provide notification. Therefore, the notification means can selectively perform operation based on the operation signal and notification of the fall in the voltage of the battery D.

Further, the notification means has at least either the turn signals 17 or the buzzer 16 provided in the two-wheeled vehicle (vehicle). If the undervoltage detection means 18 does not detect occurrence of an undervoltage when the receiving means 12 has received the operation signal, the notification means is caused to perform ordinary operation in accordance with the operation signal. If the undervoltage detection means 18 detects occurrence of an undervoltage, the notification means is caused to give the warning. Accordingly, the turn signals 17 or the buzzer 16 can provide notification of occurrence of a fall in the voltage of the battery.

The driver can grasp exhaustion of the battery D without fail by changing the operation mode of the turn signals 17 or the buzzer 16 that is electrical equipment to be operated in normal times. To be specific, the electrical equipment to be operated in normal times is intended particularly for enhancing driver's convenience (in particular, in the case of the turn signals 17 which perform answer-back operation, blinking operation of the turn signals 17 makes it easy for the driver to find the driver's vehicle. In the case of the buzzer 16, it gives an alarm sound in order to notify that operation is practiced). The mode of the electrical equipment that the driver necessarily, consciously looks when performing ordinary operation is changed when a fall occurs in the voltage of the battery D. Accordingly, the driver can grasp exhaustion of the battery D without fail.

Although the embodiments have been described thus far, the invention is not limited to them. For instance, the cylinder lock protective device to which the invention is applied can also be embodied as a device which moves the shutter 2 from the close position to the open position by means of only remote operation [specifically, a device that does not have the magnet lock 5 (manual disengagement means) and the magnet key MK]. Further, in addition to the notification mode that involves blinking the LED 10, there can also be adopted another notification mode (for instance, a mode involving lighting the LED 10 in another color, outputting an alarm sound or a warning beep from a speaker provided in the vehicle, or the like), so long as the mode enables the receiving means 12 to receive the operation signal or the notification signal and also allows provision of predetermined notification in accordance with the notification signal upon receipt of the notification signal.

Moreover, in the first embodiment, the LED 10 that lights to thereby illuminate the key hole Ra upon receipt of the operation signal by the receiving means 12 (the receiving section 14) is taken as the notification means. However, another means (which also includes anything that does not illuminate the key hole Ra) disposed separately from the LED 10 can also be employed as the notification means, so long as the means can notify a fall in the battery voltage by blinking when the receiving means 12 receives the notification signal along with the operation signal.

Furthermore, the transmission means 11 of the embodiment is formed in the grip section IKb of the ignition key IK. The transmission means 11, however, can also be formed as a member that is separately independent of the ignition key IK (a remote controller, or the like, that the driver can carry). Although the invention is applied to the two-wheeled cylinder lock in the embodiments, the invention can also be applied to a cylinder lock of another vehicle; for instance, a vessel, an ATV, and a snowmobile.

In the first embodiment, the undervoltage detection means 18 is formed in the transmission means 11, and the operation signal and the notification signal are transmitted to the receiving means 12. However, as described in connection with the second embodiment, the following alternative configuration can be adopted instead. Specifically, information about the voltage of the battery D can be transmitted from the transmission means 11 to the receiving means 12, and the undervoltage detection means 18 is formed in the receiving means 12 and detects occurrence of an undervoltage. Moreover, in the second embodiment, the information about the voltage of the battery D can be transmitted from the transmission means 11 to the receiving means 12. The undervoltage detection means 18 is formed in the receiving means 12 and can detect occurrence of an undervoltage. However, as described in connection with the first embodiment, the following alternative configuration can be adopted instead. Namely, the undervoltage detection means 18 is formed in the transmission means 11, and the operation signal and the notification signal are transmitted to the receiving means 12.

The invention can be applied to another remote control system that has a different outer shape or an additional function, so long as the transmission means can transmit the information about the voltage of the battery to the receiving means and that the receiving means enables provision of predetermined notification on the condition that the battery voltage has fallen to the predetermined level or below.

## Claims

1. A remote control system comprising:
transmission means (11) which a driver can carry, the transmission means having a battery (D) and an operation section (b) which the driver can operate, the transmission means configured to transmit an operation signal in response to an operation of the operation section (b); and
receiving means (12) disposed in a vehicle, and configured to receive the operation signal transmitted by the transmission means (11), and to activate an electrical equipment disposed in the vehicle in accordance with the operation signal,
the remote control system further comprising:
a cylinder lock protective device having
a housing (1) disposed above a rotor (R) having a key hole (Ra) for inserting and pulling out an ignition key (1 K) of the vehicle,
a shutter (2) configured to be moved, within the housing (1), between a close position and
an open position, and to close the key hole (Ra) at the close position and open the key hole (Ra) at an open position, wherein
the receiving means (12) is configured to move the shutter (2) from the close position to the open position in accordance with the operation signal,
**characterized in that** the transmission means (11) is configured to transmit information about a voltage of the battery (D) to the receiving means (12), and the receiving means (12) is configured to provide a notification when the voltage of the battery (D) has fallen to a predetermined level or below, and
the remote control system further comprises:
notification means (10, 16, 17) disposed in the vehicle, and configured to perform an operation based on the operation signal and to provide the notification when the voltage of the battery (D) has fallen to the predetermined level or below, wherein
the notification means (10) is configured to light when the receiving means (12) has received the operation signal, and to blink to notify the fall in the voltage of the battery (D) when the receiving means (12) has received the operation signal and the voltage of the battery (D) has fell to the predetermined level or below, and
wherein the notification means includes an LED (10) which is disposed in the housing (1) and configured to light or blink in order to illuminate the key hole (1K),
and the receiving means (12) is configured to provide the notification when the voltage of the battery (D) has fallen to the predetermined level or below.

2. The remote control system according to claim 1, wherein additional notification means includes at least either turn signal (17) or a buzzer (16) disposed in the vehicle, and the turn signal (17) or the buzzer (16) is configured to perform ordinary operation in accordance with the operation signal when the receiving means (12) has received the operation signal and the voltage of the battery (D) has not fallen to the predetermined level or below, and to perform a warning operation when the receiving means (12) has received the operation signal and the voltage of the battery (D) has fallen to the predetermined level or below.

3. The remote control system according to any one of claims 1 through 2, wherein the transmission means (11) is formed in a grip section of the ignition key (1K).

4. The remote control system according to any one of claims 1 through 3, wherein the transmission means (11) has undervoltage detection means (18) configured to detect that the voltage of the battery (D) has fallen to the predetermined level or below, the transmission means (11) is configured to transmit a notification signal along with the operation signal when the undervoltage detection means (18) has detected occurrence of an undervoltage, and the receiving means (12) is configured to provide the notification in accordance with the notification signal.

5. The remote control system according to claim 4, wherein the operation signal or the notification signal is transmitted when the operation section (b) is continually operated for a predetermined period of time.

6. The remote control system according to any one of claims 1 through 3, wherein the receiving means (12) has undervoltage detection means (18) configured to detect that the voltage of the battery (D) has fallen to the predetermined level or below, and to provide the notification when the undervoltage detection means (18) has detected occurrence of the undervoltage.

## Patentansprüche

1. Fernsteuerungssystem, das umfasst:
eine Sendeeinrichtung (11), die ein Fahrer tragen kann, wobei die Sendeeinrichtung eine Batterie (D) und einen Betätigungsabschnitt (b), den der Fahrer betätigen kann, umfasst, wobei die Sendeeinrichtung konfiguriert ist, um ein Betätigungssignal in Reaktion auf eine Betätigung des Betätigungsabschnitts (b) zu senden, und
eine Empfangseinrichtung (12), die in einem Fahrzeug angeordnet ist und konfiguriert ist, um das durch die Sendeeinrichtung (11) gesendete Betätigungssignal zu empfangen, und um eine elektrische Ausstattung in dem Fahrzeug in Übereinstimmung mit dem Betätigungssignal zu aktivieren,
wobei das Fernsteuerungssystem weiterhin umfasst:
eine Zylinderschloss-Schutzeinrichtung mit
einem Gehäuse (1), das über einem Rotor (R) angeordnet ist und ein Schlüsselloch (Ra) zum Einstecken und Herausziehen eines Zündschlüssels (1K) des Fahrzeugs aufweist,
einer Blende (2), die konfiguriert ist, um in dem Gehäuse (1) zwischen einer geschlossenen Position und einer geöffneten Position bewegt zu werden, wobei sie das Schlüsselloch (Ra) in der geschlossenen Position schließt und das Schlüsselloch (Ra) in der geöffneten Position öffnet, wobei
die Empfangseinrichtung (12) konfiguriert ist, um die Blende (2) von der geschlossenen Position zu der geöffneten Position in Übereinstimmung mit dem Betätigungssignal zu bewegen,
**dadurch gekennzeichnet, dass** die Sendeeinrichtung (11) konfiguriert ist, um Informationen zu der Spannung der Batterie (D) an die Empfangseinrichtung (12) zu senden, und die Empfangseinrichtung (12) konfiguriert ist, um eine Benachrichtigung vorzusehen, wenn die Spannung der Batterie (D) auf ein vorbestimmtes Niveau oder darunter gefallen ist, und
das Fernsteuerungssystem weiterhin umfasst:
eine Benachrichtigungseinrichtung (10, 16, 17), die in dem Fahrzeug angeordnet ist und konfiguriert ist, um eine Operation basierend auf dem Betätigungssignal durchzuführen und die Benachrichtigung vorzusehen, wenn die Spannung der Batterie (D) auf das vorbestimmte Niveau oder darunter fällt, wobei
die Benachrichtigungseinrichtung (10) konfiguriert ist, um zu leuchten, wenn die Empfangseinrichtung (12) das Betätigungssignal empfangen hat, und um zu blinken, um einen Abfall der Spannung der Batterie (D) anzugeben, wenn die Empfangseinrichtung (12) das Betätigungssignal empfangen hat und die Spannung der Batterie (D) auf das vorbestimmte Niveau oder darunter gefallen ist, und
wobei die Benachrichtigungseinrichtung eine LED (10) enthält, die in dem Gehäuse (1) angeordnet ist und konfiguriert ist, um zu leuchten oder zu blinken, um das Schlüsselloch (1 K) zu beleuchten,
und die Empfangseinrichtung (12) konfiguriert ist, um die Benachrichtigung vorzusehen, wenn die Spannung der Batterie (D) auf das vorbestimmte Niveau oder darunter gefallen ist.

2. Fernsteuerungssystem nach Anspruch 1, wobei eine zusätzliche Benachrichtigungseinrichtung einen Blinker (17) oder einen Summer (16) in dem Fahrzeug umfasst, wobei der Blinker (17) oder der Summer (16) konfiguriert ist, um einen gewöhnlichen Betrieb in Übereinstimmung mit dem Betätigungssignal durchzuführen, wenn die Empfangseinrichtung (12) das Betätigungssignal empfangen hat und die Spannung der Batterie (D) nicht auf das vorbestimmte Niveau oder darunter gefallen ist, und um einen Warnbetrieb durchzuführen, wenn die Empfangseinrichtung (12) das Betätigungssignal empfangen hat und die Spannung der Batterie (D) auf das vorbestimmte Niveau oder darunter gefallen ist.

3. Fernsteuerungssystem nach Anspruch 1 oder 2, wobei die Sendeeinrichtung (11) in einem Griffabschnitt des Zündschlüssels (1K) ausgebildet ist.

4. Fernsteuerungssystem nach einem der Ansprüche 1 bis 3, wobei die Sendeeinrichtung (11) eine Unterspannungs-Erfassungseinrichtung (18) aufweist, die konfiguriert ist, um zu erfassen, dass die Spannung der Batterie (D) auf das vorbestimmte Niveau oder darunter gefallen ist, wobei die Sendeeinrichtung (11) konfiguriert ist, um ein Benachrichtigungssignal zusammen mit dem Betätigungssignal zu senden, wenn die Unterspannungs-Erfassungseinrichtung (18) das Auftreten einer Unterspannung erfasst hat, und wobei die Empfangseinrichtung (12) konfiguriert ist, um die Benachrichtigung in Übereinstimmung mit dem Benachrichtigungssignal vorzusehen.

5. Fernsteuerungssystem nach Anspruch 4, wobei das Betätigungssignal oder das Benachrichtigungssignal gesendet wird, wenn der Betätigungsabschnitt (b) kontinuierlich über eine vorbestimmte Zeitperiode betätigt wird.

6. Fernsteuerungssystem nach einem der Ansprüche 1 bis 3, wobei die Empfangseinrichtung (12) eine Unterspannungs-Erfassungseinrichtung (18) aufweist, die konfiguriert ist, um zu erfassen, dass die Spannung der Batterie (D) auf das vorbestimmte Niveau oder darunter gefallen ist, und um die Benachrichtigung vorzusehen, wenn die Unterspannungs-Erfassungseinrichtung (18) das Auftreten der Unterspannung erfasst hat.

## Revendications

1. Système de télécommande comprenant :
des moyens de transmission (11) qu'un conducteur peut transporter, les moyens de transmission comportant une pile (D) et une section d'actionnement (b) que le conducteur peut actionner, les moyens de transmission étant configurés pour transmettre un signal d'actionnement en réponse à un actionnement de la section d'actionnement (b) ; et
des moyens de réception (12) disposés dans un véhicule, et configurés pour recevoir le signal d'actionnement transmis par les moyens de transmission (11), et pour activer un équipement électrique disposé dans le véhicule en fonction du signal d'actionnement,
le système de télécommande comprenant en outre :
un dispositif de protection de serrure à barillet comportant
un logement (1) disposé au-dessus d'un rotor (R) comportant un trou de clé (Ra) pour insérer et retirer une clé de contact (1K) du véhicule
un fermoir (2) configuré pour être déplacé, dans le logement (1), entre une position fermée et une position ouverte, et pour fermer le trou de clé (Ra) dans la position fermée et ouvrir le trou de clé (Ra) dans une position ouverte, dans lequel
les moyens de réception (12) sont configurés pour déplacer le fermoir (2) de la position fermée à la position ouverte selon le signal d'actionnement,
**caractérisé en ce que** les moyens de transmission (11) sont configurés pour transmettre de l'information au sujet d'un voltage de la pile (D) aux moyens de réception (12), et les moyens de réception (12) sont configurés pour fournir une notification quand le voltage de la pile (D) est tombée à un niveau prédéterminé ou au-dessous, et
le système de télécommande comprend en outre :
des moyens de notification (10, 16, 17) disposés dans le véhicule, et configurés pour réaliser une opération en fonction du signal d'actionnement et pour fournir la notification quand le voltage de la pile (D) est tombée au niveau prédéterminé ou au-dessous, dans lequel
les moyens de notification (10) sont configurés pour éclairer quand les moyens de réception (12) ont reçu le signal d'actionnement, et pour clignoter pour notifier la chute de voltage de la pile (D) quand les moyens de réception (12) ont reçu le signal d'actionnement et le voltage de la pile (D) est tombée au niveau prédéterminé ou au-dessous, et
dans lequel les moyens de notification incluent une LED (10) qui est disposée dans le logement (1) et configurée pour briller ou clignoter afin d'éclairer le trou de clé (1K),
et les moyens de réception (12) sont configurés pour fournir la notification quand le voltage de la pile (D) est tombée au niveau prédéterminé ou au-dessous.

2. Système de télécommande selon la revendication 1, dans lequel des moyens de notifications additionnels incluent au moins soit un signal de clignotant (17) ou un buzzer (16) disposé dans le véhicule, et le signal de clignotant (17) ou le buzzer (16) est configuré pour réaliser une opération ordinaire selon le signal d'actionnement quand les moyens de réception (12) ont reçu le signal d'actionnement et le voltage de la pile (D) n'est pas tombée au niveau prédéterminé ou au-dessous, et pour réaliser une opération d'avertissement quand les moyens de réception (12) ont reçu le signal d'actionnement et le voltage de la pile (D) est tombée au niveau prédéterminé ou au-dessous.

3. Système de télécommande selon l'une quelconque des revendications 1 à 2, dans lequel les moyens de transmission (11) sont formés dans une section d'accrochage de la clé de contact (1K).

4. Système de télécommande selon l'une quelconque des revendications 1 à 3, dans lequel les moyens de transmission (11) comportent des moyens de détection de sous-voltage (18) configurés pour détecter que le voltage de la pile (D) est tombée au niveau prédéterminé ou au-dessous, les moyens de transmission (11) sont configurés pour transmettre un signal de notification conjointement avec le signal d'actionnement quand les moyens de détection de sous-voltage (18) ont détecté l'occurrence d'un sous-voltage, et les moyens de réception (12) sont configurés pour fournir la notification selon le signal de notification.

5. Système de télécommande selon la revendication 4, dans lequel le signal d'actionnement ou le signal de notification est transmis quand la section d'actionnement (b) est actionnée continuellement pendant une période de temps prédéterminée.

6. Système de télécommande selon l'une quelconque des revendications 1 à 3, dans lequel les moyens de réception (12) comportent des moyens de détection de sous-voltage (18) configurés pour détecter que le voltage de la pile (D) est tombée au niveau prédéterminé ou au-dessous, et pour fournir la notification quand les moyens de détection de sous-voltage (18) ont détecté l'occurrence du sous-voltage.
